# EUROPÄISCHE PATENTSCHRIFT

(11) **EP 3 633 122 B1**
(45) Veröffentlichungstag und Bekanntmachung des Hinweises auf die Patenterteilung: **24.11.2021**
(21) Anmeldenummer: 19000448.1
(22) Anmeldetag: 03.10.2019
(51) Int. Cl.: E04H 17/26, A01K 3/00

(54) **GERÄT FÜR DIE UNTERSTÜTZUNG DES AUF- UND ABBAUS VON WEIDEZÄUNEN**
DEVICE FOR ASSISTING THE CONSTRUCTION AND REMOVAL OF PASTURE FENCES
APPAREIL D'AIDE AU MONTAGE ET AU DÉMONTAGE DES CLÔTURES

(30) Priorität: 04.10.2018 AT 3052018
(43) Veröffentlichungstag der Anmeldung: 08.04.2020
(73) Patentinhaber: Kiesa Anlagenbau GmbH, 3340 Waidhofen an der Ybbs (AT)
(72) Erfinder: Fuchsluger, Christoph, 3340 Waidhofen an der Ybbs (AT); Feigl, Thomas, 3340 Waidhofen an der Ybbs (AT)

(56) Entgegenhaltungen:
- DE-A1- 3 443 972
- GB-A- 2 048 200
- GB-A- 2 082 221
- GB-A- 2 218 687

## Beschreibung

Die Erfindung betrifft ein Gerät gemäß Anspruch 1 für die Unterstützung des Auf- und Abbaus von Weidezäunen.

Die an sich bekannten Grundfunktionen und an sich bekannte optionale vorteilhafte Zusatzfunktionen eines Gerät für die Unterstützung des Auf- und Abbaus von Weidezäunen werden an Hand des in der WO 98/48135 A1 gezeigten beispielhaften Gerätes erläutert:
Das Gerät gemäß der WO 98/48135 A1 ist auf einem Fahrzeug montiert. Es umfasst eine oder mehrere Haspeln für jeweils ein flexibles Längsmaterial (Zaunband oder Zaundraht), eine oder mehrere Führungsösen für das Führen des Längsmaterials zwischen Haspeln und Zaun, ein aus zueinander verstellbaren Längsteilen bestehendes Gestänge, welches die Führungsöse bzw. die Führungsösen trägt, sowie eine Aufbewahrungseinrichtung für mitzuführende Zaunpfähle.

Ein übrlicher Antriebsstrang, welcher auf eine Haspel wirkt umfasst einen Antriebsmotor und eine Rutschkupplung. Bei stillstehendem Antriebsmotor ist die Haspel nur unter Überwindung des durch die Rutschkupplung begrenzten Drehmomentes drehbar. Wenn der Antrieb läuft ist die Haspel dazu angetrieben, Längsmaterial an ihrer Mantelfläche aufzuwickeln, wobei das Drehmoment welches die Zugkraft auf das Längsmaterial bewirkt, durch die Rutschkupplung begrenzt ist.

Die unbedingt notwendigen Teile bzw. Funktionen des Gerätes sind eine Haspel für das Auf- und Abwickeln des Längsmaterials, wobei eine Bremsmöglichkeit und eine motorische Antriebsmöglichkeit für die Haspel gegeben sein muss, sowie eine Befestigungseinrichtung um das Gerät an einem Fahrzeug befestigen zu können.

Für den Aufbau eines Weidezaunes unter Zuhilfenahme des Gerätes gemäß der WO 98/48135 A1 steht der Antrieb der Haspeln still. Die Anfangsenden des Längsmaterials werden von den Haspeln abgewickelt, durch die Führungsösen geführt und an einem ersten in der Landschaft verankerten Zaunpfahl befestigt. Dann fährt das Fahrzeug an welchem das Gerät montiert ist jene Linie im Gelände entlang, an welcher der Zaun aufzubauen. Durch das Wegbewegen vom ersten Zaunpfahl werden die Stränge des Längsmaterials von den Haspeln abgewickelt, wobei die Rutschkupplung die Drehbewegung der Haspeln bremst und damit für eine gute Spannung des Längsmaterials sorgt. In einem Abstand zum jeweils letzten Zaunpfahl wird ein weiterer Zaunpfahl im Gelände verankert, - typischerweise in die Erde gerammt -, und das flexible Längsmaterial daran befestigt. An Geländebereichen, an welchen das Fahrzeug nicht an jener Linie entlang fahren kann, an welcher der Zaun aufzustellen ist - beispielsweise weil ein Baum im Weg steht - werden die Haspeln von dem Gerät abgenommen und manuell entlang der besagten Linie getragen, dann wieder auf das Gerät aufgesteckt und dann durch den Haspelantrieb so lange angetrieben, dass der schon abgewickelte Längsbereich bis zur Rutschgrenze der Rutschkupplungen gespannt wird.

Im ideal einfach Fall werden beim Abbau eines Weidezaunes unter Zuhilfenahme des Gerätes, erst an einem Ende des Weidezaunes die dort befindlichen Enden der Stränge von Längsmaterial vom Zaun gelöst und über die Führungsösen zu den Haspeln des wiederum an einem Fahrzeug montierten Gerätes geführt und dort verankert. Dann wird der Antrieb der Haspeln gestartet, und das Fahrzeug fährt langsam am noch bestehenden Zaun entlang. Die Haspeln wickeln dabei die Stränge von Längsmaterial auf soweit dieses durch das Entlangfahren weniger gespannt ist als dies durch die Rutschkupplungen in den Antriebssträngen der Haspeln vorgegeben ist. Wenn das Fahrzeug zu einem Zaunpfahl gelangt, werden von diesem die Stränge des Längsmaterials händisch abgelöst und der Zaunpfahl aus dem Untergrund gezogen und in die Aufbewahrungseinrichtung am Fahrzeug verladen.

Abweichungen vom ideal einfachen Fall treten häufig auf, vor allem dann, wenn das Gelände viele Hindernisse aufweist, sodass sich das Fahrzeug welches das Gerät trägt nicht wirklich entlang des Weidezaunes bewegen kann, oder wenn sich ein Strang des Längsmaterials in der Landschaft verhängt hat, sodass er nicht so einfach abgezogen werden kann, beispielsweise weil er durch Gestrüpp umwuchert wurde, oder durch Weidetiere in sumpfigen Untergrund getreten wurde.

In solchen Fällen ist es angebracht, doch erst am Zaun entlang zu gehen, das Längsmaterial von den Pflöcken und ggf. vom Gestrüpp etc. zu lösen und hinzulegen, und die einzelnen Pflöcke zur nächsten Stelle zu tragen zu welchen das Fahrzeug gut zufahren kann. Das Aufwickeln des Längsmaterials kann dann wiederum mit Hilfe des Gerätes erfolgen, wobei das Gerät selbst (und das Fahrzeug an dem es montiert ist) im Gelände nicht bewegt wird, wohl aber die Haspeln angetrieben werden um das Längsmaterial aufzuwickeln. Dabei ist allerdings oft das - zufolge Rutschkupplung begrenzte - Antriebsmoment an die Haspeln zu gering, um das Längsmaterial aufzuwickeln; oft wird dabei auch die Drehzahl des Haspelantriebes als ärgerlich niedrig empfunden.

Zwecks Vermeidung der zuletzt genannten Probleme die Rutschkupplungen und den Haspelantrieb steuerbar auszubilden führt zu störend komplizierter Bedienbarkeit und damit zu Gefahr von Falschbenutzung, sowie zu höheren Anschaffungskosten, zu höherem Wartungsbedarf und zu höherer Schadensanfälligkeit.

Die DE 3443972 A1 zeigt ein Gerät gemäß dem nächsten Stand der Technik von Anspruch 1, welches Teil einer fahrbaren Landwirtschaftsmaschine ist, und das Auf- und Abwickeln von flexiblem Längsmaterial für Weidezäune zu unterstützt. Das Gerät umfasst eine Haspel auf welche das flexible Längsmaterial zu wickeln ist, sowie einen Antriebsmotor, welcher über einen Keilriemen, der auch als Rutschkupplung dienen kann, die Haspel zu Drehung antreiben kann. Die Haspel befindet sich zwischen den beiden Haltearmen einer Schwinge der fahrbaren Landwirtschaftsmaschine. Die Haspel ist drehfest mit einer koaxial zu ihr angeordneten Welle verbunden. Die Welle ist an jedem der beiden Haltearme der Schwinge drehbar gelagert gehalten, und sie ragt mit beiden ihrer Enden über die Breite der Schwinge hinaus und die Wellenstümpfe sind frei zugänglich. Das Gerät weist kein Gehäuse auf; alle bewegten Teile sind frei zugänglich.

Die GB 2082221 A zeigt ein Gerät, welches an den Haltearmen einer fahrbaren Landwirtschaftsmaschine fixierbar ist und das Auf- und Abwickeln von flexiblem Längsmaterial für Weidezäune zu unterstützt sowie das Einschlagen von Zaunpfählen in die Erde unterstützt. Für die Arbeit mit dem flexiblen Längsmaterial weist es einen rechteckigen Grundrahmen auf an welchem mehrere Haspelwellen und eine Antriebswelle drehbar gelagert gehalten sind, wobei die Bewegungsübertragung zwischen der Antriebswelle und den Haspelwellen über Riemenantriebe und Rutschkupplungen erfolgt. Keiner dieser Teile befindet sich in einem Gehäuse.

Die GB 2048200 A zeigt ein für das Ab- und Aufwickeln von Drähten für einen Weidezaun. Das Gerät ist ähnlich wie eine Schiebetruhe bewegbar indem es an zwei Griffen die am Ende von abstehenden Hebeln angeordnet sind, partiell angehoben und geschoben oder gezogen wird, und dabei mit einem Rad am Untergrund abrollt. Drehbewegung der Welle des am Untergrund rollenden Rades treibt über einen Riemen eine Welle an, auf welcher Haspeln für die Drähte hintereinander angeordnet sind. Drehbewegung der letzteren Welle wird unter Zwischenschaltung von jeweils einer Rutschkupplung auf die einzelnen Haspeln übertragen.

Die GB 2218687 A zeigt eine fahrbare Arbeitsmaschine für das Ab- und Aufwickeln von Drähten für einen Weidezaun. Es weist mehrere Haspelwellen auf, welche über einen Riemenantrieb zu Drehbewegung antreibbar sind, wobei das Antriebsrad für den Riemen ein Rad ist mit welchem die Arbeitsmaschine am Untergrund rollt. Durch lockerstellen des Antriebsriemens ist auch eine Rutschkupplung für den Haspelantrieb realisierbar.

Die der Erfindung zu Grunde liegende Aufgabe besteht darin, ein Gerät der besprochenen Art für die Unterstützung des Auf- und Abbaus von Weidezäunen so zu verbessern, dass unter Vermeidung der im vorigen Absatz genannten Probleme, die das Aufwickeln von Längsmaterial bewirkende Rotationsbewegung einer Haspel wahlweise auch durch größeres Antriebsmoment und mit größerer Drehzahl erfolgen kann, als dies für den üblichen Betrieb des Gerätes optimal ist.

Die Aufgabe wird durch den Gegenstand von Anspruch 1 gelöst, wobei eine Haspelwelle vorgesehen ist, welche koaxial zur Haspel angeordnet ist und mit dieser gegen Relativdrehung um die gemeinsame Achse drehfest verbunden ist, und einen Wellenstumpf aufweist, dessen Stirnseite und Mantelfläche frei zugänglich angeordnet sind. (Ein Wellenstumpf in diesem Sinne ist ein endseitiger Längsbereich einer Welle).

Durch diese Maßnahme, welche ohne Verminderung von Robustheit und weitgehend ohne Zusatzkosten realisierbar ist, wird erreicht, dass die Haspelwelle an dem frei zugänglichen Endbereich mit dem Werkzeugeingriffsteil eines an sich nicht zum Gerät gehörenden, aber ohnedies in jedem Landwirtschaftsbetrieb vorhandenen maschinellen Drehwerkzeuges, wie beispielsweise einer Handbohrmaschine oder eines Akkuschraubers, verbunden werden kann, und durch das maschinelle Drehwerkzeug zu Drehbewegung antreibbar ist, womit auch die Haspel - unter Umgehung von deren standardmäßigem Antrieb - zu Drehbewegung antreibbar ist. Da damit auch die Rutschkupplung überbrückt ist, kann die Haspel mit deutlich höherem Drehmoment und mit deutlich höherer Drehzahl angetrieben werden als dies mit dem standardmäßigen Antrieb möglich wäre.

Die Erfindung wird an Hand von stilisierten Zeichnungen zu einer beispielhaften vorteilhaften Ausführung eines erfindungsgemäßen Gerätes veranschaulicht:
- Fig. 1: zeigt ein beispielhaftes erfindungsgemäßes Gerät in Seitenansicht.
- Fig. 2: zeigt den Antriebsstrang einer Haspel des Gerätes von Fig. 1 in einer gegenüber Fig. 1 detaillierteren Ansicht.

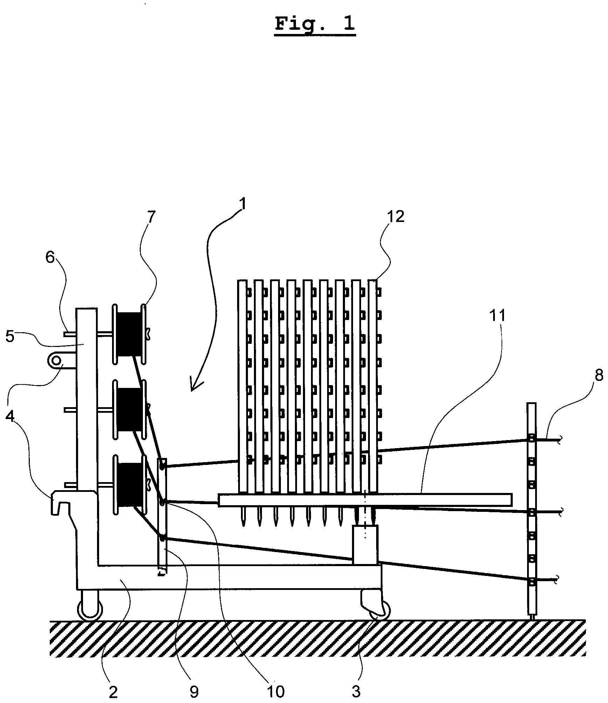

Das in Fig. 1 skizzierte erfindungsgemäße Gerät 1 weist einen Grundrahmen 2, Räder 3, Halteteile 4, ein Antriebsgehäuse 5, Haspelwellen 6, Haspeln 7 für flexibles Längsmaterial 8, ein Gestänge 9, Führungsösen 10 und eine Aufbewahrungseinrichtung 11 für Zaunpfähle 12 auf.

Durch die Räder 3, welche typischerweise zwei Bockrollen und zwei Lenkrollen sind, ist das Gerät 1 für sich allein zumindest auf ebenem festem Grund wie beispielsweise in einer Scheune fahrbar. Die Halteteile 4 dienen dazu, das Gerät 1 für den bestimmungsgemäßen Einsatz an den hydraulisch bewegbaren Haltearmen einer fahrbaren Landwirtschaftsmaschine wie typischerweise einem Traktor verankern und anheben zu können, um es durch diese auch über Wiesen und unebenes Gelände bewegen zu können. Das Antriebsgehäuse 5 trägt die Haspelwellen 6 und beherbergt die wesentlichen Teile zu deren drehenden Antrieb. Die Haspelwellen 6 tragen die Haspeln 7 und sind drehfest mit diesen verbunden. Von den Haspeln 7 wird beim Bau eines Zaunes das flexible Längsmaterial 8 für den Zaun, also Zaundraht oder Zaunband abgewickelt, und beim Abbau eines Zaunes aufgewickelt. Das am Grundrahmen 2 befestigte Gestänge 9 besteht typischerweise aus in verstellbaren Steckverbindungen aneinander befestigten Stahlhohlprofilen; seine Funktion ist es, die Führungsösen 10 zu tragen. Durch die Führungsösen 10 wird das Längsmaterial 8 im Verlauf zwischen den Haspeln 7 und den im Gelände verankerten Zaunpfählen 12 geführt. Typischerweise sind die Führungsösen 10 starke starre Drahtbiegeteile, die in einem mittleren Längsteil zu einer Art Gewindegang spiralig geformt sind.

Die Aufbewahrungseinrichtung 11 ist in diesem Fall als Platte mit einer Rasterlochung ausgebildet, wobei in die Löcher der Rasterlochung bestimmungsgemäß die Zaunpfähle 12 einsteckbar sind und damit geordnet gehalten werden. In einer besonders bevorzugten Ausführungsform ist die Aufbewahrungsvorrichtung 11 um ihre Mittenachse gegenüber dem sie tragenden Grundrahmen 2 schwenkbar; damit wird das Bestücken der Aufbewahrungsvorrichtung 11 und das Entnehmen von dieser besonders komfortabel durchführbar.

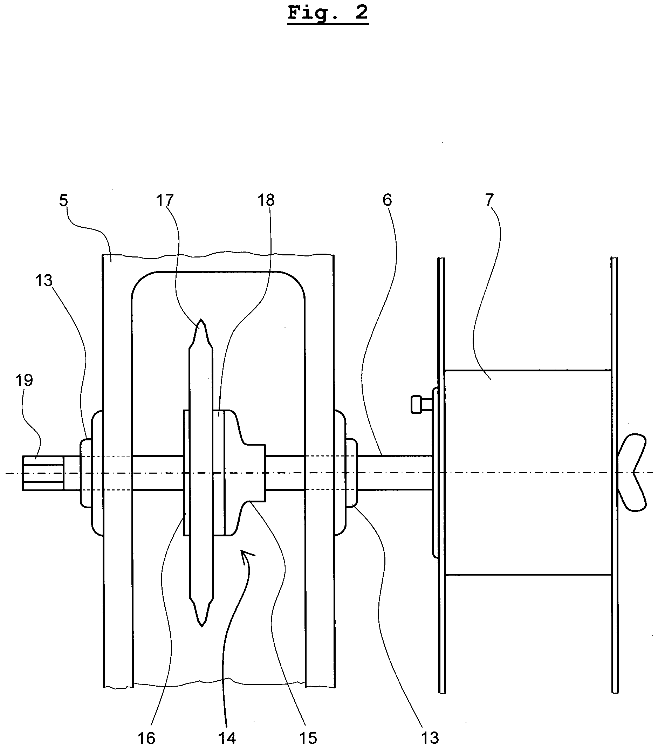

Die wesentliche erfindungsgemäße Besonderheit des Gerätes 1 liegt im Drehantrieb der Haspeln 7. Eine beispielhafte erfindungsgemäße Ausführung dazu ist an Hand von Fig. 2 veranschaulicht.

Die Haspel 7 ist drehfest mit einer koaxial zu ihr angeordneten Haspelwelle 6 verbunden, welche typischerweise ein Rundstab aus Stahl ist. Die Haspelwelle 6 ist durch das Antriebsgehäuse 5 hindurchgeführt, und an den Durchführungsstellen durch Wände des Antriebsgehäuses 5 durch Lager 13 um ihre Achse drehbar geführt gehalten. In dem im Innenraum des Antriebsgehäuses 5 liegenden Längsbereich ist auf der Haspelwelle 6 eine Rutschkupplung 14 angeordnet, deren abtriebsseitiger Teil 15 starr mit der Haspelwelle 6 verbunden ist und deren antriebsseitiger Teil 16 starr mit einem Kettenrad 17 verbunden ist. Zwischen dem antriebsseitigen Teil 16 und dem abtriebsseitigen Teil 15 der Rutschkupplung 14 wird ggf. Drehmoment durch einen Reibbelag 18 übertragen. Das Kettenrad 17 und damit der antriebsseitige Teil 16 wird ggf. über eine Antriebskette (nicht dargestellt) angetrieben, die ihrerseits durch einen Antriebsmotor, typischerweise einen Elektromotor oder einen Hydraulikmotor angetrieben wird.

Sofern das Gerät 1 - wie in Fig. 1 skizziert - mehre Haspeln 7 aufweist, können durch die eine Antriebskette die einzelnen Kettenräder 17 aller Haspelwellen 6 gemeinsam angetrieben werden, womit mit einem einzigen Antriebsmotor für alle Haspeln 7 das Auslangen gefunden wird.

Das Drehmoment welches vom Kettenrad 17 an die Haspel 7 übertragen werden kann, ist durch die Rutschkupplung 14 begrenzt, idealerweise auf ein Maß bei welchem beim Auf- und Abbau von Weidezäunen die von der Haspel 7 auf das Längsmaterial 8 ausgeübte Zugkraft ausreichend groß ist um das Längsmaterial 8 gut zu strecken aber nicht so groß, dass Gefahr für Fehlfunktionen wie dem Ausreißen von Zaunpfählen oder gar Beschädigungen von Teilen auftritt. Um teure Überdimensionierung und übermäßigen Verschleiß des Reibbelages 18 der Rutschkupplung 14 zu vermeiden ist es ratsam, den Antriebsmotor für den Antrieb des Kettenrades 17 bezüglich Drehmoment und Drehzahl nicht auf höhere Werte hin auszulegen, als jene, welche für die Funktion beim üblichen Abbau von Weidezäunen gerade sicher ausreichen.

Der Aufbau von Weidezäunen mit Hilfe des Gerätes 1 ist auch dann komfortabel möglich, wenn die Haspel 7 gar nicht motorisch angetrieben ist; es reicht aus, wenn das Kettenrad 17 gegen Drehung blockiert ist, und die Haspel 7 nur unter Überwindung des Reibungsmomentes der Rutschkupplung 14 drehbar ist. Um Drehung des Kettenrades 17 zu blockieren, kann der Antriebsmotor für die Kette so ausgelegt sein, dass er von selbst blockiert, sobald der abgeschaltet ist, oder es kann eine separate, wie auch immer geartete Sperrvorrichtung vorgesehen werden, welche Bewegung der Antriebskette blockiert. Beispielsweise kann dies eine schwenkbar am Antriebsgehäuse 5 gelagerte Klinke sein, die mit der Antriebskette oder mit einem mit dieser in Eingriff befindlichen Zahnrad in bzw. außer Eingriff gebracht werden kann.

Das von der Haspel 7 abgewandt liegende Ende der Haspelwelle 6 bildet einen Wellenstumpf 19, welcher frei zugänglich an der von der Haspel 7 abgewandt liegenden Seite aus dem Antriebsgehäuse 5 hervorragt.

Damit wird eine komfortable Möglichkeit geboten, Längsmaterial 8 welches lose im Gelände liegt, oder sich noch in einer Verkaufsverpackung befindet, durch die Haspel 7 rasch aufwickeln zu können, indem das Antriebsmoment für die erforderliche Drehbewegung der Haspel 7 nicht über das Kettenrad 17 auf die Haspelwelle 6 aufgebracht wird, sondern mittels eines an sich nicht zum Gerät 1 gehörenden maschinellen Drehwerkzeuges wie typischerweise einer Akkubohrmaschine oder einem Akkuschrauber, welches am Wellenstumpf 19 angreift.

In der vorliegenden vorteilhaften Ausführung ist der Wellenstumpf 19 an seinem Endbereich als regelmäßiges Sechskantprofil ausgebildet, sodass er eine Eingriffsgeometrie für den Eingriff des maschinellen Drehwerkzeuges bietet.

Es ist vorteilhaft den Wellenstumpf 19 für den Eingriff des an sich nicht zum Gerät 1 gehörenden maschinellen Drehwerkzeuges, nicht an der Seite der Haspel 7 der Haspelwelle 6 vorzusehen, weil dieses Wellenende aufgrund des dort im Nahbereich befindlichen Längsmaterials 8 nicht so gut zugänglich ist.

Für die vorteilhafte Realisierbarkeit der erfindungsgemäßen Bauweise ist es wichtig, dass dann, wenn mehrere Haspeln 7 verwendet werden, diese nicht auf einer gemeinsamen Haspelwelle angeordnet sind, sondern auf jeweils einer eigenen Haspelwelle 6. Optimalerweise sind dabei die Haspelwellen 6 zueinander parallel ausgerichtet und überlappen sich in ihren Längsbereichen, weil es damit einfach wird, sie mit einer gemeinsamen Antriebskette oder einem gemeinsamen Keilriemen die/der sich in einer zur Längsrichtung der Haspelwellen normal liegenden Ebene bewegt, anzutreiben.

Die zu Fig. 2 beschriebene Antriebsweise mittels Kettenrad und Antriebskette ist eine beispielhafte vorteilhafte Antriebsweise, weil sie bei vertretbaren Kosten extrem robust und langlebig ist und mit den in landwirtschaftlichen Betrieben vorhandenen Mitteln im Bedarfsfall gut gewartet und repariert werden kann. Innerhalb des Erfindungsgedankens sind aber andere Antriebsweisen auch anwendbar, beispielsweise Riemenscheiben und Riemen anstatt Kettenrädern und Antriebskette, sowie einzelne Elektro- oder Hydraulikmotoren für jede einzelne Haspelwelle.

## Patentansprüche

1. Gerät (1) welches dazu vorgesehen ist von einer fahrbaren Landwirtschaftsmaschine mitgeführt zu werden um den Auf- und Abbau von Weidezäunen zu unterstützen, wobei das Gerät (1) eine Haspel (7) aufweist, durch welche Längsmaterial (8) äuf- und abwickelbar ist, und welche durch einen Antriebsmotor zu Drehbewegung antreibbar ist, wobei ein Antriebsstrang zwischen Antriebsmotor und Haspel (7) eine Rutschkupplung (14) aufweist, durch welche das zwischen Antriebsmotor und Haspel (7) übertragbare Drehmoment begrenzbar ist, wobei eine Haspelwelle (6), welche koaxial zur Haspel (7) angeordnet ist, und mit dieser gegen Relativdrehung um die gemeinsame Achse drehfest verbunden ist, einen Wellenstumpf (19) aufweist, dessen Stirnseite und Mantelfläche frei zugänglich angeordnet sind,
wobei sich die Haspelwelle (6) durch ein Antriebsgehäuse (5) an welchem sie drehbar gelagert ist, hindurch erstreckt, wobei sich die Rutschkupplung (14) in dem Antriebsgehäuse (5) befindet, und das Antriebsgehäuse (5) zwischen der Haspel (7) und jenem Wellenstumpf (19) angeordnet ist, dessen Stirnseite und Mantelfläche frei zugänglich sind.

2. Gerät (1) nach Anspruch 1, **dadurch gekennzeichnet, dass** es mehrere Haspeln (7) aufweist, wobei jede einzelne dieser Haspeln (7) auf einer jeweils separaten Haspelwelle (6) befestigt ist und über eine jeweils separate Rutschkupplung (14) antreibbar ist, und wobei die Haspelwellen (6) zueinander parallel ausgerichtet sind.

3. Gerät (1) nach Anspruch 2, **dadurch gekennzeichnet, dass** an den antriebsseitigen Teilen (16) der Rutschkupplungen (14) jeweils ein Kettenrad (17) oder eine Riemenscheibe befestigt ist, und dass die Kettenräder (17) bzw. Riemenscheiben in einer gemeinsamen Ebene liegen und über eine gemeinsame Antriebskette bzw. über einen gemeinsamen Treibriemen verbunden sind.

4. Gerät (1) nach einem der Ansprüche 1 bis 3, **dadurch gekennzeichnet, dass** der Wellenstumpf (19) eine Eingriffsgeometrie für ein Drehwerkzeug aufweist.

5. Gerät (1) nach einem der Ansprüche 1 bis 4, **dadurch gekennzeichnet, dass** es eine Aufbewahrungseinrichtung (11) für Zaunpfähle (12) aufweist, wobei die Aufbewahrungseinrichtung (11) eine Platte mit einer Rasterlochung ist, wobei in die Löcher der Rasterlochung die Zaunpfähle (12) einsteckbar sind, und wobei die Platte um eine normal zu ihrer Ebene liegende Achse schwenkbar ist.

## Claims

1. Device (1) designed to be conveyed by a drivable agricultural machine to support the erection and dismantling of fences; wherein the device (1) has a reel (7) around which lengthways material (8) can be wound and unwound, and which can be rotated by a drive motor; wherein a drive train between the drive motor and reel (7) is fitted with a slip clutch (14), which limits the torque between transferable between the drive motor and reel (7); wherein a reel shaft (6), which is arranged coaxially to the reel (7) and is connected non-rotatably to prevent relative rotation around the entire axle, has a shaft end (19) the front and lateral surface of which are freely accessible; wherein the reel shaft (6) protrudes through a drive housing (5) on which it is pivoted; wherein the slip clutch (14) is located in the drive housing (5), and the drive housing (5) is arranged between the reel (7) and that shaft end (19), the front and lateral surface of which are freely accessible.

2. Device (1) according to claim 1, **characterised in that** it has multiple reels (7), wherein each individual reel (7) is fastened on a separate reel shaft (6) and can be driven by a separate slip clutch (14), and wherein the reel shafts (6) are aligned in parallel.

3. Device (1) according to claim 2, **characterised in that** a chain wheel (17) or a belt pulley is fastened to the drive-side parts (16) of the slip clutch (14), and that the chain wheels (17) or belt pulleys lie in the same plane, and are connected by a joint drive chain or by a joint drive belt.

4. Device (1) according to one of claims 1 to 3, **characterised in that** the shaft end (19) has an engagement geometry for a turning tool.

5. Device (1) according to one of claims 1 to 4, **characterised in that** it has a storage facility (11) for fence posts (12), wherein the storage facility (11) consists of a screen with perforations, wherein the fence posts (12) can be inserted in the holes in the screen, and wherein the screen can pivot around an axle normal to its plane.

## Revendications

1. Appareil (1) conçu pour être transporté par une machine agricole mobile pour aider au montage et démontage de clôtures, l'appareil (1) présentant un dévidoir (7) permettant d'enrouler et de dérouler un matériau longitudinal (8) et pouvant être entraîné dans un mouvement de rotation par un moteur d'entraînement, une transmission présentant entre le moteur d'entraînement et le dévidoir (7) un accouplement à friction (14) permettant de limiter le couple transmissible entre le moteur d'entraînement et le dévidoir (7), un arbre de dévidoir (6), agencé de façon coaxiale par rapport au dévidoir (7) et raccordé de manière fixe en rotation avec ce dernier contre une rotation relative autour de l'axe commun, présentant un bout d'arbre (19) dont la face frontale et la surface latérale sont agencées librement accessibles, l'arbre de dévidoir (6) s'étendant à travers un boîtier d'entraînement (5) sur lequel il est monté de manière rotative, l'accouplement à friction (14) se trouvant dans le boîtier d'entraînement (5), et le boîtier d'entraînement (5) étant agencé entre le dévidoir (7) et le bout d'arbre (19), dont la face frontale et la surface latérale sont librement accessibles.

2. Appareil (1) selon la revendication 1, **caractérisé en ce qu'**il présente plusieurs dévidoirs (7), chacun de ces dévidoirs (7) étant fixé sur un arbre de dévidoir (6) séparé, et pouvant être entraîné par un accouplement à friction (14) séparé, et les arbres de dévidoir (6) étant alignés parallèlement les uns par rapport aux autres.

3. Appareil (1) selon la revendication 2, **caractérisé en ce qu'**il est fixé sur les parties côté entraînement (16) des accouplements à friction (14) un pignon à chaîne (17) ou une poulie, et **en ce que** les pignons à chaîne (17) ou les poulies se situent dans un plan commun et sont raccordés par le biais d'une chaîne de transmission commune ou d'une courroie de transmission commune.

4. Appareil (1) selon l'une des revendications 1 à 3, **caractérisé en ce que** le bout d'arbre (19) présente une géométrie de préhension pour un outil rotatif.

5. Appareil (1) selon l'une des revendications 1 à 4, **caractérisé en ce qu'**il présente un dispositif de rangement (11) pour les piquets de clôture (12), le dispositif de rangement (11) étant une plaque à perforations, les piquets de clôture (12) pouvant être insérés dans les trous de la plaque à perforations, et la plaque pouvant être pivotée autour d'un axe normal par rapport à son plan.
